# EUROPEAN PATENT APPLICATION

(11) **EP 2 733 652 A1**
(43) Date of publication of application: **21.05.2014**
(21) Application number: 13003181.8
(22) Date of filing: 21.06.2013
(51) Int. Cl.: G06Q 10/06, G06Q 40/04, G06Q 40/00, G06Q 30/06

(54) **Circular transaction path detection**

(30) Priority: 20.11.2012 US 201213682486
(71) Applicant: SAP AG, 69190 Walldorf (DE)
(72) Inventor: Qin, Bin, 69190 Walldorf (DE); Malov, Denis, 69190 Walldorf (DE)
(74) Representative: Müller-Boré & Partner Patentanwälte PartG mbB

(57) **Abstract**

Example systems and methods of circular transaction path detection are presented. In one example, a directed graph comprising nodes and directed edges interconnecting the nodes is generated. The directed graph is based on information describing a plurality of parties and a plurality of transactions between the parties. A circular path length of interest is received. Strongly connected components of the directed graph are identified. Within each of the strongly connected components, each circular path having a length equal to the circular path length of interest is discovered. For each discovered circular path, the transactions represented by the directed edges of the path are denoted as related transactions.

## Description

### TECHNICAL FIELD

The present disclosure relates generally to data processing and, in an example embodiment, to circular transaction path detection.

### BACKGROUND

In many different business markets, such as stock markets, commodities futures markets, and the like, large numbers of transactions, in which a buyer purchases some quantity of one or more items from a seller, may occur with great frequency on a daily basis. With advances in electronics technology, the volume and speed of such transactions have increased by leaps and bounds. While the overwhelming majority of such transactions are performed in the course of legal and ethical business dealings, some small percentage of such transactions represents illegal or fraudulent activity. In one example, two or more individuals or entities may attempt to generate public interest in a corporate stock by engaging in transactions of the stock that are primarily intended to greatly increase the trading volume of the stock, thus making the stock appear to be more valuable than under more typical trading circumstances, thus potentially driving up the price of the stock in a fraudulent manner. To generate such volume, one or more trading parties may buy and sell the stock multiple times among themselves, such as in a circular fashion, according to some prior arrangement or plan. Such circular trading may be considered illegal or fraudulent if performed specifically to manipulate the price of the stock.

Such circular trading may be employed for other reasons as well, such as for tax evasion or money laundering purposes. Further, such trading need not be limited to stocks, but may occur with respect to commodities futures, national or regional currencies, or any item of interest that may be bought or sold in a marketplace.

Given the extremely large number of transactions that may occur within any market over a particular time period, such as a day, week, or month, detection of such potentially fraudulent circular transactions may be difficult and time-consuming, even with the use of specialized computer programs designed specifically for that purpose running on high-speed processing systems.

### BRIEF DESCRIPTION OF DRAWINGS

The present disclosure is illustrated by way of example and not limitation in the figures of the accompanying drawings, in which like references indicate similar elements and in which:

FIG. 1 is a block diagram of an example system for circular transaction path detection;

FIG. 2 is a flow diagram illustrating an example method of detecting circular transaction paths of a particular path length of interest;

FIGS. 3A and 3B are block diagrams of an example directed graph representing a number of entities, as well as the transactions that have occurred therebetween, that may be used to detect circular transaction paths;

FIGS. 4A, 4B, 4C, and 4D are flow diagrams illustrating example methods of reducing an amount of processing involved in detecting circular transaction paths represented in a directed graph;

FIG. 5A is a block diagram illustrating an example of the work reduction method of FIG. 4C;

FIG. 5B is a block diagram illustrating an example of the work reduction method of FIG. 4D;

FIG. 6 is a table illustrating each potential starting node of the directed graph of FIG. 3B at which a search of a circular path may begin, an identification of the starting nodes which need not be processed via application of the work reduction methods of FIGS. 4A, 4B, 4C, and 4D, and the resulting circular paths detected having a length of interest of two;

FIG. 7 is a table illustrating each potential starting node of the directed graph of FIG. 3B at which a search of a circular path may begin, an identification of the starting nodes which need not be processed via application of the work reduction methods of FIGS. 4A, 4B, 4C, and 4D, and the resulting circular paths detected having a length of interest of three;

FIGS. 8A through 8D illustrate example pseudo-code segments for implementing an example method of detecting circular transaction paths of a particular length of interest; and

FIG. 9 is a block diagram of a machine in the example form of a processing system within which may be executed a set of instructions for causing the machine to perform any one or more of the methodologies discussed herein.

### DETAILED DESCRIPTION

The description that follows includes illustrative systems, methods, techniques, instruction sequences, and computing machine program products that embody illustrative embodiments. In the following description, for purposes of explanation, numerous specific details are set forth in order to provide an understanding of various embodiments of the inventive subject matter. It will be evident, however, to those skilled in the art that embodiments of the inventive subject matter may be practiced without these specific details. In general, well-known instruction instances, protocols, structures, and techniques have not been shown in detail.

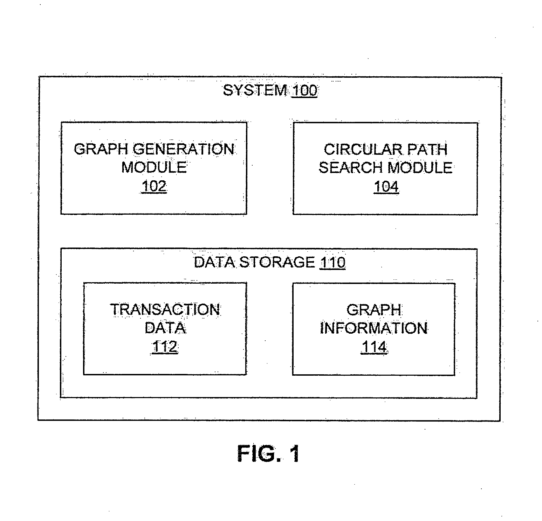

FIG. 1 is a block diagram of an example system 100 for circular transaction path detection. In some examples, transactions may include any transaction between two or more parties, such as sales, leases, or other arrangements with respect to one or more products, services, securities (e.g., stocks, bonds, etc.), or other potential items of commerce. Generally, the system 100 may be employed to model such transactions as a directed graph that includes a plurality of nodes and directed edges interconnecting the nodes. Generally, the nodes may represent parties, individuals, or entities involved in the various transaction, while the directed edges may represent the transactions. In some examples, the transactions may be limited to a particular product, service, security, or other item, or to a class or group of such items.

The system 100 then may process the directed graph to detect circular transaction paths of a particular path length of interest. For example, the system 100 may process the directed graph to detect all circular transactions of length two. A circular transaction path of length two would be indicated, for example, by a first transaction from a first party to a second party, and a second transaction from the second party back to the first party. In some markets, a circular transaction path of length two may be the most common way in which transactional volume of a stock or other commodity is generated for the purposes of increasing the stock price while the original owner of the stock effectively retains ownership of the stock. In other examples, circular transaction paths of three or more may be employed for the same purpose while making detection of the circular transactional path more difficult.

As shown in FIG. 1, the system 100 may include a graph generation module 102, a circular path search module 104, and data storage 110. Further, the data storage 110 may store transaction data 112 and graph information 114. In one example, the system 100 may include one or more computing systems to perform the operations associated with the graph generation module 102, the circular path search module 104 and the data storage 110. Other components other than those depicted in FIG. 1, such as, for example, one or more communication interfaces, may be employed in the system 100 to aid in performing the various functions associated with the system 100 in some implementations. Such components are not depicted in FIG. 1 or described further herein to simplify and focus the following discussion.

The graph generation module 102 may utilize the transaction data 112 of the data storage 110 to generate one or more directed graphs representing the various transactions that have occurred during some previously occurring period of time. In one example, the transaction data 112 may include information regarding each transaction of interest, such as the item or items that were the subject of the transaction, the monetary amount of the transaction, the date and time of the transaction, the parties involved in the transaction, and the roles of the parties in the transaction. Other types of information regarding the transaction not specifically enumerated herein may also be stored as the transaction data 112.

The graph generation module 102 may access and process the transaction data 112 to generate one or more directed graphs representing a plurality of the transactions, as mentioned above. In one implementation, the graph generation module 102 may filter the transaction data 112 according to the parties or items involved in the transactions, the amounts of the transactions, the time periods during which the transactions occurred, and/or other factors or attributes regarding the transactions. In an example, the resulting directed graph includes nodes representing parties to the various transactions, and the directed edges connecting the nodes represent the transactions themselves. The direction of the directed edges may correlate with the direction in which the item or target of the transaction, such as a product, service, security, commodity, or other item of interest, changed hands, or the direction in which the monetary value being offered for the item of interest was transferred. As shown in FIG. 1, the resulting directed graphs are stored as the graph information 114 in the data storage 110.

After the graph generation module 102 generates the one or more directed graphs, the circular path search module 104 may access the graph information 114 describing the one or directed graphs and process, analyze, or search the one or more graphs to detect circular transaction paths of some predetermined length. Examples of how this processing or searching may be performed are discussed in greater detail below.

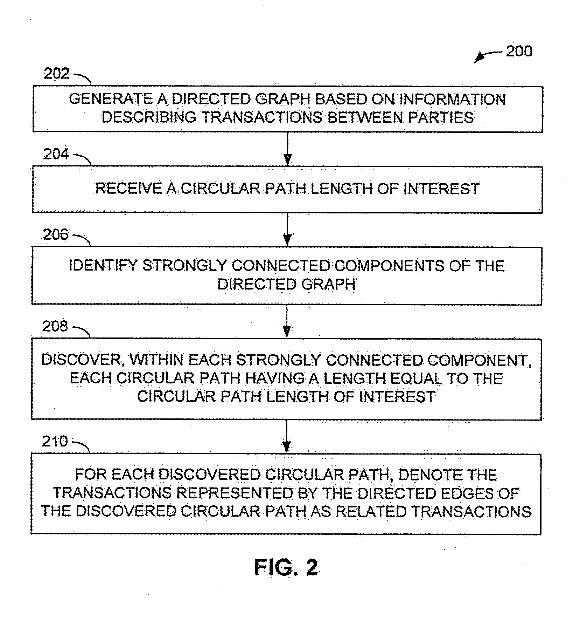

FIG. 2 is a flow diagram illustrating an example method 200 of detecting circular transaction paths of a particular path length of interest. In one example, the method 200 is performed using the system 100 depicted in FIG. 1, although other systems may be employed to perform the method 200 in other implementations. In the method 200, a directed graph is generated based on information describing transactions between parties (operation 202). Also, a circular transaction path length of interest is received (operation 204). Strongly connected components of the directed graph are then identified (operation 206). The term "strongly connected component," as the term is employed in the art of graph theory with respect to directed graphs, refers to a sub-graph of the directed graph such that if sub-graph contains a node 302, the sub-graph also contains all the circular paths containing the node 302. That is, for each circular path in the directed graph, all nodes of that circular path belong to the same strongly connected component. A further discussion of strongly connected components is presented below.

Within each strongly connected component of the directed graph, each circular path having a length equal to the circular path length of interest is discovered (operation 208). In some examples described more fully below, this discovery or searching process may include the elimination of possible search paths according to one or more preset rules. Within each discovered circular path, the transactions represented by the directed edges of the discovered circular path may then be denoted as related transactions (operation 210). In one implementation, the related transactions may be viewed as potentially fraudulent transactions, as discussed above. In other examples, operations 204-210 may be repeated using the same directed graph in light of different circular path lengths if a number of different lengths of circular paths are of interest.

While the operations 202 through 210 of the method 200 of FIG. 2 are shown in a specific order, other orders of operations, including possibly concurrent or continual execution of at least portions of one or more operations, may be possible in some implementations of the method 200, as well as other methods discussed herein. For example, each of the strongly connected components of the directed graphs, as well as a number of circular paths within each strongly connected component, may be processed in parallel in order to discover circular paths of a particular length of interest.

In accordance with at least some of the embodiments described above, detection of circular transaction paths of one or more lengths that may be indicative of fraudulent transactional activity may be detected in an efficient manner. More specifically, by representing the transactions as a directed graph and subdividing the graph into strongly connected components, portions of the path discovery process may be apportioned among multiple processors or processing threads in order to reduce the overall execution time. Also, one or more rules may be employed to reduce the overall number of paths searched, thus decreasing the discovery execution time while maintaining accuracy of the circular path discovery process. Other possible aspects and advantages may be ascertained from the discussion of the various embodiments presented below.

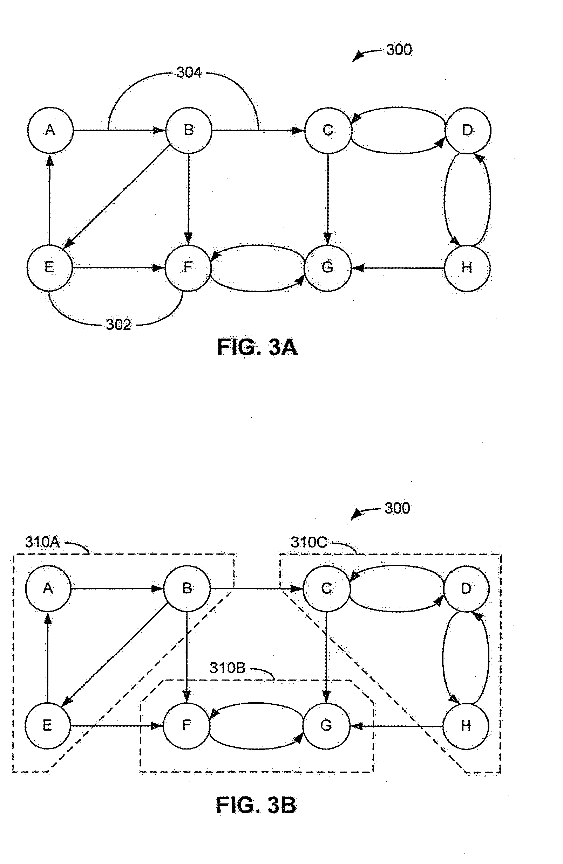

FIGS. 3A and 3B are block diagrams of an example directed graph 300 representing a number of entities, as well as the transactions that have occurred therebetween, that may be used to detect circular transaction paths. While the directed graph 300 presents a rather trivial example of a number of parties and the transactions that occur among the parties, the directed graph 300 provides a useful example through which the various concepts and techniques discussed herein may be demonstrated. In more realistic examples, the number of nodes and directed edges may reach into the hundreds of millions.

In FIG. 3A, the directed graph 300 includes eight nodes 302, labeled A through H, interconnected with a number of directed edges 304 represented as arrows. Such a directed graph 300 may be referred to in mathematical notation as a graph *G* with a set of nodes *V* and a set of directed edges *E*, or *G*{*V, E*}*.* Each arrow may represent one or more transactions between the parties represented by the nodes 302 at each end of the arrow. The arrow may indicate the direction in which the target of the transaction was delivered, or the direction in which the money or other consideration given for the target was transferred. The nodes 302 and directed edges 304 may be derived or generated from transaction data 112 that describe the various transactions of interest, as discussed above.

As shown in FIG. 3B, the directed graph 300 may then be segmented into its strongly connected components (SCCs) 310A, 310B, and 310C (collectively, 310). In general, the SCCs 310 of a directed graph 300 are the smallest non-trivial (e.g., greater than one node) strongly-connected sub-graphs of the directed graph 300. As mentioned above, a strongly-connected sub-graph is a sub-graph such that if the sub-graph contains a node 302, the sub-graph also contains all circular paths containing the node 302. Further, when viewing the resulting SCCs 310 as single nodes, the directed graph 300 is reduced or "condensed" into a directed acyclic graph in which no circular path of the directed graph 300 involves more than one SCC 310. As shown in FIG. 3B, all circular paths are contained within their own particular SCCs 310.

In one example, the SCCs 310 are identified via one of the algorithms available in the art for such a purpose. In one example, the algorithm employed is Tarjan's Algorithm, proposed by Robert E. Tarjan (Tarjan, R.E. (1972), "Depth-first search and linear graph algorithms," SIAM Journal on Computing 1 (2): 146-160). Tarjan's Algorithm, which is well-known in the art of graph theory, utilizes only a single depth-first search, in which each path in the graph is explored to its conclusion before backtracking to explore other paths. In other examples, other algorithms for identifying the strongly connected components, such as Kosaraju's Algorithm and the Path-Based Strong Component Algorithm, which are also known in the art of graph theory, may be utilized in other implementations.

Once the SCCs 310 are identified, the paths within each SCC 310 may be searched to discover the various circular paths having a particular or desired length of interest. In one example, each node 302 of an SCC 310 may be employed as a starting node 302 from which to begin a search for a set of paths within the SCC 310 that form a circular path of the desired length. While each possible circular path may be searched in this manner, some paths discovered may be duplicates of others. For example, a path from Node A to Node B and back is the same as a path from Node B to Node A and back. In addition, some paths may be eliminated altogether due to their impossibility of being included as part of a circular path. As a result, one or more searching rules may be employed to reduce the overall amount of searching compared to a rote searching of all available paths.

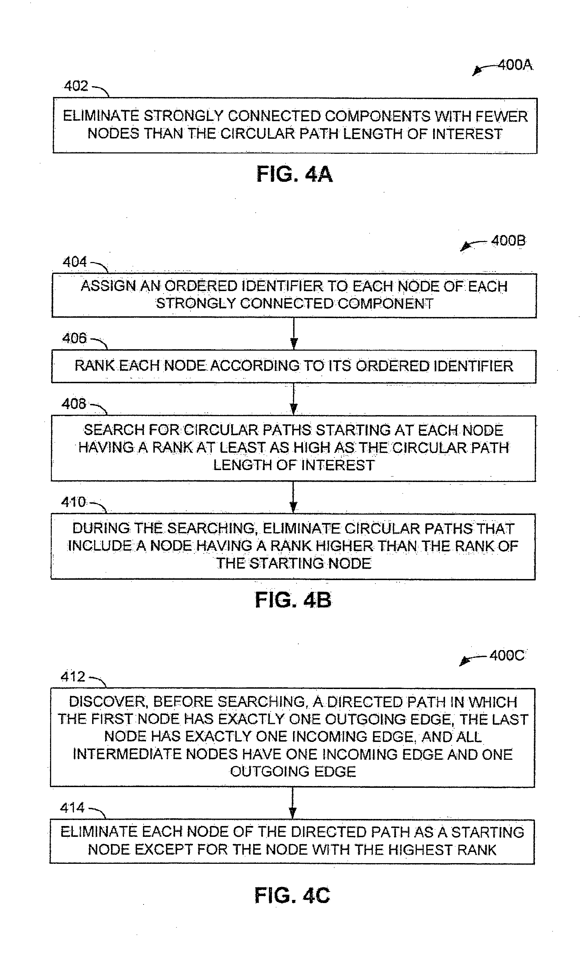

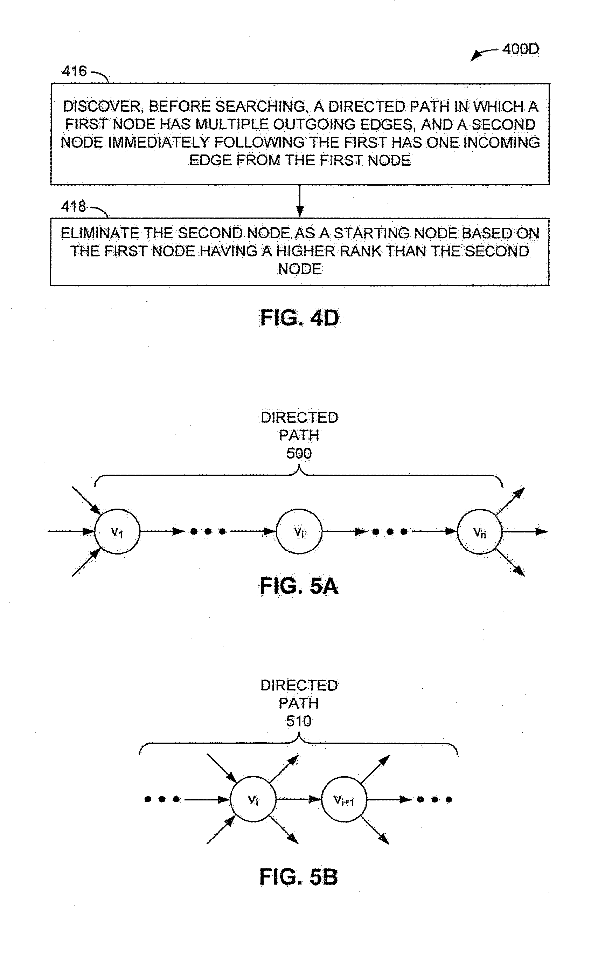

FIGS. 4A, 4B, 4C, and 4D are flow diagrams illustrating example methods of implementing rules for reducing the amount of processing involved in detecting circular transaction paths represented in a directed graph 300. More specifically, each of FIGS. 4A, 4B, 4C, and 4D depicts one of four such rules (sometimes referred to herein as Rule One, Rule Two, Rule Three (Case One), and Rule Three (Case Two), respectively, as employed in the embodiments discussed below). For example, in the method 400A (Rule One) of FIG. 4A, SCCs 310 with fewer nodes 302 than the circular path length of interest are eliminated from the searching process (operation 402). For example, using the directed graph 300 of FIG. 3B as an example, if the circular path length of interest is three, SCC 310B is eliminated from the searching process since it contains only two nodes 302: Nodes F and G. Oppositely, SCCs 310A and 310C, each having three nodes 302, would still be available for the searching process. In an example in which the circular path length of interest is four, none of the SCCs 310 of FIG. 3B would be eligible for further searching.

In FIG. 4B, the method 400B (Rule Two) includes assigning an ordered identifier to each node 302 of each SCC 310 (operation 404). In the examples described hereinafter, node identifiers such as A, B, C, and so on are likened to 1, 2, 3, and so forth, such that latter node letters (e.g., Node C) are of a higher order than earlier node letters (e.g., Node A). Each node 302 is ranked according to its ordered identifier (operation 406) so that, for example, Node C is ranked higher than Node B, which, in turn, is ranked higher than Node A.

Circular paths in the SCC 310 are then searched starting at each node 302 having a rank at least as high as the circular path length of interest (operation 408). For example, in an SCC 310 having Nodes A, B, C, D, and E, and with a circular path length of interest equal to three, searches may be performed using Nodes C, D, and E (the top three ranked nodes) as starting nodes, and Nodes A and B would be ineligible as starting nodes 302 for circular path searches. Further, during a search using a particular starting node 302, all paths that include other nodes 302 in the SCC 310 with a higher rank than the starting node 302 may be eliminated as potential circular paths (operation 410). As a result, a search for a circular path starting from Node C can ignore any paths that include Nodes D or E. The various operations 404-410 of FIG. 4B (Rule Two) are employed to prevent counting two or more different paths involving exactly the same nodes 302 as separate circular paths. For example, by employing Rule Two, the searching process will not expend resources searching and counting circular paths Node C to Node B to Node A to Node C, Node B to Node A to Node C to Node B, and Node A to Node C to Node B to Node A as separate circular paths when they actually describe the same circular path.

In method 400C (Rule Three (Case One)) of FIG. 4C, before searching an SCC 310 for a circular path commences, a directed path may be discovered in which a first node 302 has exactly one outgoing directed edge 304, a last node 302 has exactly one incoming directed edge 304, and each intermediate node 302 between the first node 302 and the last node 302 has exactly one incoming directed edge 304 and exactly one outgoing directed edge 304 (operation 412). In response to discovering such a directed path, each node 302 of the directed path may be eliminated as a starting node 302 for circular path searching except for the node 302 of the highest rank (operation 414). FIG. 5A provides an example directed path 500 with nodes *v₁*, *...vᵢ,* ..., *vₙ,* as described in operation 412 of the method 400C of FIG. 4C, with the first node *v₁* having any number of incoming edges 304 but only one outgoing edge 304, the last node *vₙ* having any number of outgoing edges 304 but only one incoming edge 304, and each intermediate node *vᵢ* (for 1 < *i* < *n*) having exactly one incoming edge 304 and one outgoing edge 304. More specifically, over 1 ≤ *i* < *n*, the outgoing edge 304 of each *vᵢ* is the incoming edge of *v*_{*i*+*1*}, and over 1 < *i* ≤ *n,* the incoming edge 304 of each *vᵢ* is the outgoing edge of *vᵢ₋₁*. As a result, any circular path that includes any of these nodes *v₁, ...vᵢ,* ..., *vₙ* must include all of these nodes. Therefore, using only one of the nodes 302 (in this case, the highest-ordered node 302) is sufficient as a starting node 302 for searching purposes.

Similarly, in method 400D (Rule Three (Case Two)) of FIG. 4D, before searching an SCC 310 for a circular path begins, a directed path may be discovered in which a first node 302 has multiple outgoing directed edges 304, and a second node 302 has exactly one incoming directed edge 304, with that edge 304 originating from the first node 302 (operation 416). In response to discovering such a directed path, the second node 302 may be eliminated as a starting node 302 for a search operation if the first node 302 has a higher rank than the second node 302 (operation 418). FIG. 5B provides an example directed path 510 with first node *vᵢ* and second node *v*_{*i*+}*₁,* as described in operation 416 of the method 400D of FIG. 4D, with the first node *vᵢ* having any number of incoming edges 304 and outgoing edges 304, and the second node *v*_{*i*+*1*} having any number of outgoing edges 304 but only one incoming edge 304, with that incoming edge 304 originating from the first node *vᵢ.* As shown in FIG. 5B, other nodes 302 may precede the first node *vᵢ,* and additional nodes 302 may follow the second node *v*_{*i*+}*₁.* As a result, any circular path that includes the second node *v*_{*i*+*1*} will also include the first node *vᵢ.* Therefore, if the first node *vᵢ* has a higher rank than the second node *v*_{*i*+}*₁,* the second node *v*_{*i*+*1*} may then be marked as ineligible as a starting node 302. Further, if Rule Two (method 400B discussed above) is also employed, then in situations in which the second node *v*_{*i*+*1*} has a higher rank than the first node *vᵢ,* a search involving the first node *vᵢ* may ignore the directed edge 304 to the second node *v*_{*i*+*1*} as part of a possible circular path.

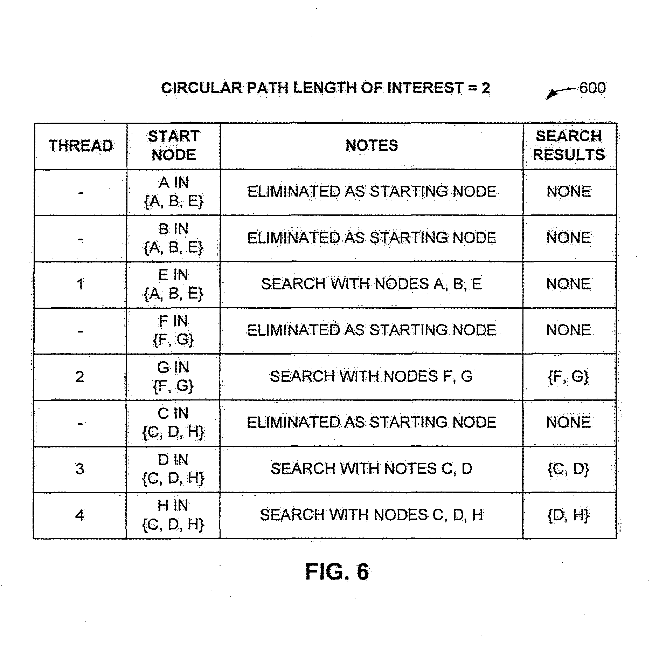

In a specific example of application of the rules embodied by the methods 400A, 400B, 400C, and 400D of FIGS. 4A, 4B, 4C, and 4D, FIG. 6 is a table 600 illustrating each potential starting node 302 of the directed graph 300 of FIG. 3B at which a search of a circular path may begin, an identification of the starting nodes 302 which need not be processed according to the rules described above, and the resulting circular paths detected having a length of interest of two. As shown in table 600, each node 302 (e.g., Nodes A through H) of the directed graph 300 of FIG. 3B is identified as a potential starting node 302 with its particular SCC 310. More specifically, each of Nodes A, B, and E of SCC 310A, Nodes F and G of SCC 310B, and Nodes C, D, and H of SCC 310C are listed as potential starting nodes 302.

Given a circular path length of interest of two, applying Rule One does not eliminate any potential starting nodes 302 since none of the SCCs 310 includes less than two nodes 302. In applying Rule Two, any nodes 302 with an identifier of a rank that is less than two can be eliminated as a starting node 302. As a result, Node A of SCC 310A, Node F of SCC 310B, and Node C of SCC 310C are eliminated on that basis. Rule Three may then be applied to remaining Nodes B, D, E, G and H. Using Rule Three, Node B may then be eliminated as a starting node 302. As a result, half of the eight possible starting nodes 302 in the directed graph 300 are eliminated before searching begins in earnest.

Further, when performing the search operation with each of Nodes D, E, G, and H, Rule Two can be further applied to stop searching a particular path if a node 302 is encountered that has a higher rank than the starting node 302. In the case of Node D, for example, the outgoing edge 304 of Node D that connects to Node H may be ignored since Node H is of a higher rank than Node D.

Proceeding with searching each of the remaining paths using Nodes D, E, G, and H as starting nodes 302 yields three circular paths of length two: a circular path from Node G to Node F and back, a circular path from Node D to Node C and back, and a circular path from Node H to Node D and back. In the case of Node E, no circular path of length two from Node E to either Nodes A or B and back is found. Thus, three circular paths of length two are found in the directed graph 300.

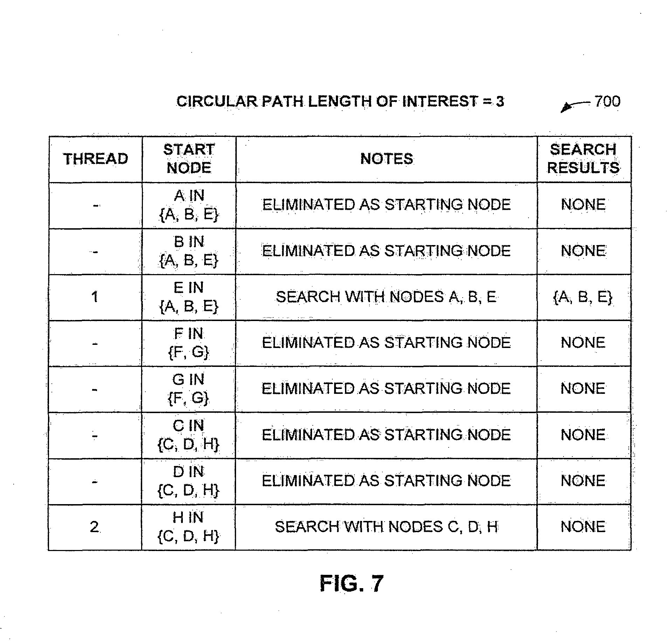

In another example, FIG. 7 is a table 700 illustrating each potential starting node 302 of the directed graph 300 of FIG. 3B at which a search of a circular path may begin; an identification of the starting nodes 302 which need not be processed via application of Rules One, Two, and Three; and the resulting circular paths detected having a length of interest of three.

Applying Rule One in this example results in both Nodes F and G of SCC 310B being eliminated, as an SCC 310 with only two nodes 302 cannot produce a circular path of length three. Also, in applying Rule Two, only the highest-ranked node 302 in each of SCC 310A and SCC 310C (e.g., Node E in SCC 310A and Node H in SCC 310C) remain as potential starting nodes 302 for the search procedures to follow, as SCC 310A and SCC 310C have three nodes 302 apiece. Further, the use of Rule Three is unnecessary in this example as at most one eligible starting node 302 remains in each SCC 310.

In using Node E of SCC 310A as a starting node 302, searching for a circular path length of three results in the path of Node E to Node A to Node B, and then back to Node E. However, utilizing Node H as a starting node 302 results in no circular path of length three being available, as only a circular path from Node H to Node D and back may be discovered.

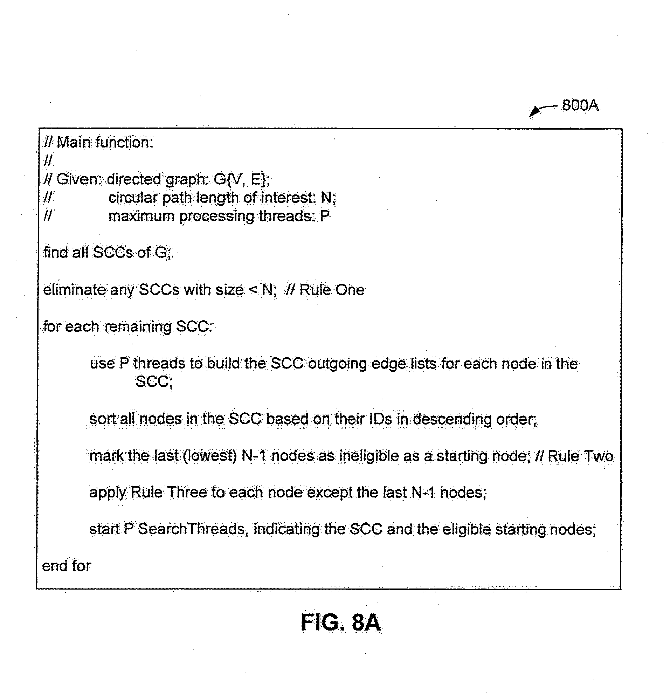

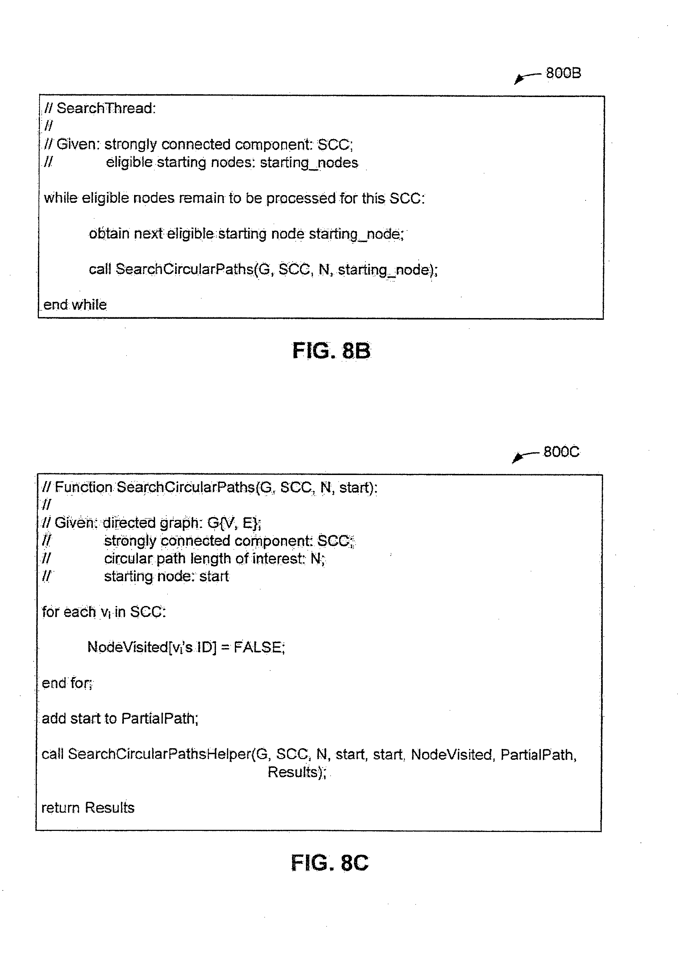

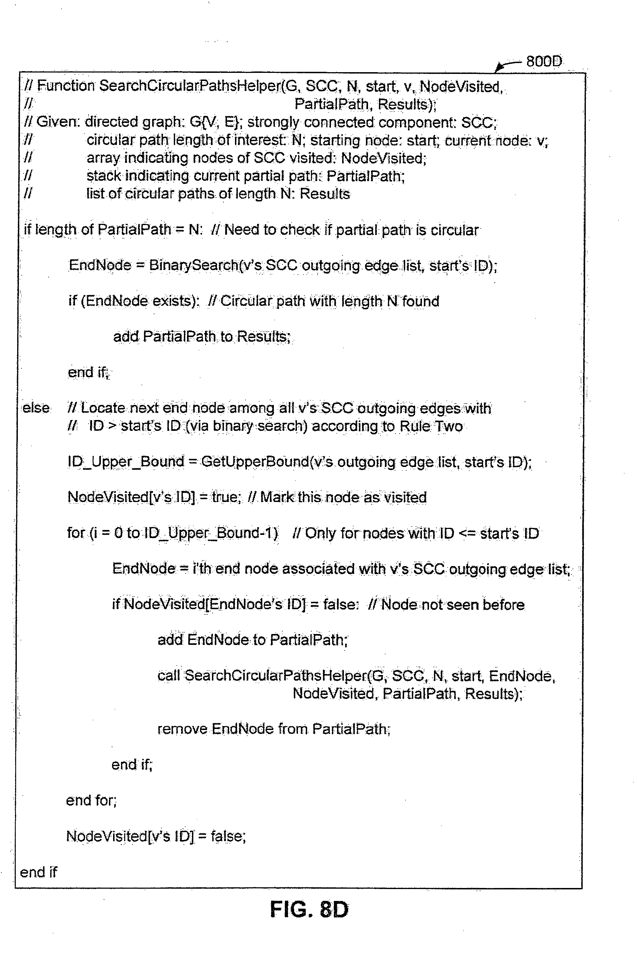

FIGS. 8A through 8D illustrate example pseudo-code segments for implementing an example method of detecting circular transaction paths of a particular length of interest. More specifically, FIG. 8A provides pseudo-code for a main function 800A that employs other functions provided in FIGS. 8B, 8C, and 8D, either directly or indirectly, to perform the search for circular paths of a particular length of interest. More specifically, main function 800A is given a directed graph 300 *G*{*V, E*} having a set of nodes 302 (or vertices) *V* and a set of directed edges 304 *E* interconnecting the nodes 302 *V*. The main function 800A also receives *N*, a circular path length of interest. The main function 800A then handles the segmentation of the directed graph 300 *G* into individual SCCs 310 using an appropriate algorithm, such as Tarjan's Algorithm, noted above. The main function 800A then applies Rule One to eliminate any SCCs 310 with a size (e.g., a number of nodes 302) less than *N*, the circular path length of interest.

For each remaining SCC 310, the outgoing edges 304 of each node 302 in the SCC 310 that end in another node 302 within the same SCC 310 are noted in an outgoing edge list for that node 302. In some examples, the outgoing edge list for each node 302 may be sorted based on the identifier of the node 302 at which each outgoing edge 304 terminates, as such sorting may aid in identifying those edges 304 which may be eliminated due to their rank being higher than that of the starting node 302 according to Rule Two during a circular path search. In one example, multiple processors or processing threads may be employed to perform the edge list building and sorting operations according to individual SCCs 310 or nodes 302.

In the main function 800A, each of the nodes 302 in each SCC 310 may also be sorted in descending rank according to their identifiers. Based on this ranking, the main function 800A may then mark the last, or lowest, *N*-1 nodes 302 as being ineligible as starting nodes 302 according to Rule Two. Also, sorting the nodes 302 in this manner allows one or more processing threads to process the higher-ranked nodes 302 being used as starting nodes 302 for search operations first, as the higher-ranked nodes 302 tend to consume the most searching operations compared to lower-ranked nodes 302 under Rule Two, as described above. In some examples, the main function 800A may then apply Rule Three (e.g., either or both of Case One and Case Two) to each remaining eligible starting node 302 in each remaining SCC 310 to determine if more nodes 302 may be eliminated from the group of nodes 302 eligible as starting nodes 302 for search purposes.

At this point, the main function 800A may initiate a number of searching threads via calls to *SearchThread* 800B, illustrated in the pseudo-code of FIG 8B. In one example, the number of searching threads initiated is dictated by the number of processors available for executing the searching threads. In one example, each initiation of *SearchThread* 800B is provided with a list of the eligible starting nodes 302 from which a search for at least one circular path of the length of interest N is to be initiated.

Continuing with FIG. 8B, each *SearchThread* 800B may access the list of eligible starting nodes 302 *starting_nodes* of the current SCC 310 being processed. The *SearchThread* 800B may then retrieve the next eligible starting node 302 *starting_node* from the list that has not been processed and call function *SearchCircularPaths* 800C, as shown in FIG. 8C, providing as input the directed graph 300 *G*, the current SCC 310, the circular path length of interest *N*, and the current starting node 302 *starting_node.* Once the search for circular paths using the current starting node 302 *starting_node* is complete, *SearchThread* 800B may determine if any more eligible starting nodes 302 remain to be processed. If so, another call to *SearchCircularPaths* 800C using the next eligible starting node 302 may be made. Otherwise, this particular instantiation of *SearchThread* 800B may then terminate.

Continuing with FIG. 8C, *SearchCircularPaths* 800C receives the directed graph 300 *G*, the current SCC 310, the circular path length of interest *N*, and the starting node 302 *start.* In *SearchCircularPaths* 800C, a local one-dimensional Boolean array *NodeVisited* may be created, in which each element of *NodeVisited* may represent one of the nodes 302 of the current SCC 310. In addition, the index of each element of *NodeVisited* may represent the identifier rank of the node 302 associated with that element, with increasing index values being associated with an increasing rank of the node 302 according to its identifier. In one example, Node A would be associated with Index 0, Node B would be associated with Index 1, and so forth. Further, each element of *NodeVisited* may be initialized as FALSE, indicating that none of the elements has yet been encountered during a search for a circular path of length N.

*SearchCircularPaths* 800C may then add the starting node 302 *start* to a data structure *PartialPath,* which tracks the nodes 302 that constitute the current path being searched. *SearchCircularPaths* 800C may then call another function, *SearchCircularPathsHelper* 800D of FIG. 8D, which receives the directed graph 300 *G*, the current SCC 310, the circular path length of interest *N*, the starting node 302 *start* as both the starting node 302 *start* and the current node 302 *v*, *NodeVisited, PartialPath,* and *Results,* which may be a list of circular paths of length *N.* In one example, *PartialPath* may be a one-dimensional array; a linked list; a last-in, first-out (LIFO) stack structure; or some other type of data structure.

In *SearchCircularPaths* 800C, when execution control returns from *SearchCircularPathsHelper* 800D, *Results* includes the circular paths of length *N,* if any, found in *SearchCircularPathsHelper* 800D. *SearchCircularPaths* 800C then returns *Results* to its associated *SearchThread* 800B, which may in turn add *Results* to a centralized data structure that contains all discovered circular paths of length N from all *SearchThreads* 800B.

As depicted in FIG. 8D, *SearchCircularPathsHelper* 800D is a recursive function that may call itself in a depth-first fashion as the search for a circular path from a particular starting node 302 *start* progresses. At the start of *SearchCircularPathsHelper* 800D, the length of *PartialPath* is checked to determine if it equals the circular path length of interest *N*. If so, *SearchCircularPathsHelper* 800D may check if *PartialPath* is actually circular. To that end, *SearchCircularPathsHelper* 800D may perform a binary search via a call to a function *BinarySearch* (not exemplified via pseudo-code herein), which takes the current node 302 *v*'s outgoing edge list and the identifier of the starting node 302 *start* to determine if the starting node 302 *start* terminates one of the outgoing edges 304 of the current node 302 *v*. If the starting node 302 *start* is found to terminate one of the outgoing edges 304 of the current node 302 *v, BinarySearch* returns the value TRUE; otherwise, FALSE is returned. If TRUE is returned, then *PartialPath,* which now represents the nodes 302 of a circular path of length *N,* is added to *Results.* In other examples, other types of searches instead of a binary search may be performed to determine if an outgoing edge of the current node 302 *v* connects to the starting node 302 *start.*

If, instead, the length of *PartialPath* is not equal to *N,* more searching to complete a circular path may be undertaken. In this example, *SearchCircularPathsHelper* 800D attempts to locate the next node terminating one of the current node 302 *v*'s outgoing edges 304 having an identifier or rank greater than that of the starting node 302 *start,* as indicated under Rule Two. To accomplish this task, *SearchCircularPathsHelper* 800D determines the next index of current node 302 *v*'s sorted outgoing edge list that is associated with a node 302 that has a greater rank than the starting node 302 *Start.* This determination is made via a call to a function *GetUpperBound* (not described in pseudo-code herein), which, in one example, is a binary search routine. In Fig. 8D, this index is stored as *ID_Upper_Bound.*

*SearchCircularPathsHelper* 800D may then mark the current node 302 *v* as being visited by marking its element in the *NodeVisited* array as TRUE. *SearchCircularPathsHelper* 800D may then initiate a search for a circular path from the current node 302 *v* for each outgoing edge of current node 302 *v* terminated by a node 302 having a rank no higher than the starting node 302 *start,* as indicated by Rule Two. To accomplish this task, *SearchCircularPathsHelper* 800D accesses the next eligible terminating node 302, or end node 302, from the current node 302 *v*'s outgoing edge list and determines if that node 302 has been visited during this search by checking the appropriate element of *NodeVisited.* If this terminating node 302 has not been visited already along this path, that node 302 is added to *PartialPath,* and another call is made to *SearchCircularPathsHelper* 800D with the terminating node 302 being designated as the current node 302 for that function call.

The search may then continue, with each successive node 302 in the search of a path resulting in another call to *SearchCircularPathsHelper* 800D. If the search results in a circular path of length *N* being found, the *PartialPath* constructed to that point is added to *Results* as the circular path. If, instead, the search is terminated before a circular path is found by encountering the end of the path or by encountering a node 302 that has already been designated as part of the path, the last call to *SearchCircularPathsHelper* 800D designates the element of *NodeVisited* associated with its current node 302 *v* as FALSE, and returns to the previous instantiation of *SearchCircularPathsHelper* 800D. In turn, the previous instantiation of *SearchCircularPathsHelper* 800D removes from *PartialPath* its terminating node 302 (e.g., the current node 302 *v* for the instantiation of *SearchCircularPathsHelper* 800D just returned from), marks the current node 302 *v* for the current instantiation of *SearchCircularPathsHelper* 800D in *NodeVisited* as FALSE, and returns, thus returning back up the path in search of an alternate path. Thus, the search for the next circular path of length *N* progresses in depth-first fashion until all potential paths from the starting node 302 *start* have been explored.

While FIGS. 8A through 8D provide a particular example in pseudo-code of how the searching of circular paths of some desired length may be accomplished, other methods of detecting circular paths that employ one or more of Rules One, Two, and Three discussed above may be possible.

As a result of at least some of the embodiments discussed herein, as the number of processors *P* increases, or as the circular path length of interest decreases, or both, the average computational complexity of the algorithms described herein decreases and performance improves. Overall, this level of performance may represent a vast improvement over other methods that do not systematically reduce the number of searches performed or are not able to employ multiple processors in an efficient and parallel manner.

Further, in some implementations, some enhancements may be made to the functions and associated pseudo-code of FIGS. 8A through 8D. For example, function call overhead, especially for functions such as *SearchCircularPathsHelper* 800D that may be called numerous times, may be reduced by making the function call inline, by reducing the number of parameters that are passed to the function, and by other techniques. In another example, the binary searches employed within *SearchCircularPathsHelper* 800D may be rendered more efficient by caching the results received for each node 302 entered during a search so that those results may be reused without initiating the binary search again. Additionally, to reduce the amount of interference between the searching operations and the outputting of the results, the outputting of the results may be performed by a separate thread so that the searching and outputting operations may be performed in parallel using different types of resources (e.g., processing resources and/or input/output resources). Other enhancements aside from those discussed above may be employed in other examples.

Thus, in view of at least some of the embodiments described herein, the searching of circular transaction paths of some length of interest may be facilitated by representing the transactions as a directed graph and employing one or more techniques for dividing the overall computational work into separate, identifiable portions for processing and searching possible paths using multiple processors operating in parallel. Further, the implementation of one or more rules, as described herein, may eliminate a significant number of duplicate searches by eliminating at least some nodes from which individual path searches may begin, as well as reduce the amount of processing or computation to complete searches that have already been initiated by terminating searching along some paths based on the identity of the starting node for those paths.

While the embodiments described herein are directed to transactions between parties, other types of interactions between parties, such as, for example, social or business networking connections made between people or parties (e.g. connections established between people on Facebook® or other social or business networking sites) may also be represented as a directed or undirected graph in order to detect social or business connections that form circular paths of a specific length of interest.

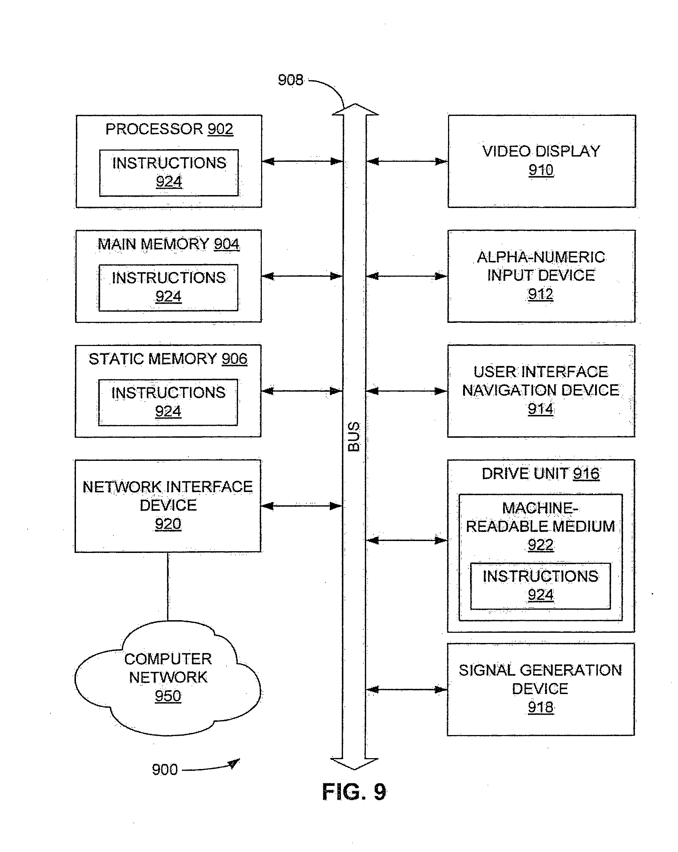

FIG. 9 depicts a block diagram of a machine in the example form of a processing system 900 within which may be executed a set of instructions 924 for causing the machine to perform any one or more of the methodologies discussed herein. In alternative embodiments, the machine operates as a standalone device or may be connected (e.g., networked) to other machines. In a networked deployment, the machine may operate in the capacity of a server or a client machine in a server-client network environment, or as a peer machine in a peer-to-peer (or distributed) network environment.

The machine is capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example of the processing system 900 includes a processor 902 (e.g., a central processing unit (CPU), a graphics processing unit (GPU), or both), a main memory 904 (e.g., random access memory), and static memory 906 (e.g., static random-access memory), which communicate with each other via bus 908. The processing system 900 may further include video display unit 910 (e.g., a plasma display, a liquid crystal display (LCD), or a cathode ray tube (CRT)). The processing system 900 also includes an alphanumeric input device 912 (e.g., a keyboard), a user interface (UI) navigation device 914 (e.g., a mouse), a disk drive unit 916, a signal generation device 918 (e.g., a speaker), and a network interface device 920.

The disk drive unit 916 (a type of non-volatile memory storage) includes a machine-readable medium 922 on which is stored one or more sets of data structures and instructions 924 (e.g., software) embodying or utilized by any one or more of the methodologies or functions described herein. The data structures and instructions 924 may also reside, completely or at least partially, within the main memory 904, the static memory 906, and/or within the processor 902 during execution thereof by processing system 900, with the main memory 904 and processor 902 also constituting machine-readable, tangible media.

The data structures and instructions 924 may further be transmitted or received over a computer network 950 via network interface device 920 utilizing any one of a number of well-known transfer protocols (e.g., HyperText Transfer Protocol (HTTP)).

Certain embodiments are described herein as including logic or a number of components, modules, or mechanisms. Modules may constitute either software modules (e.g., code embodied on a machine-readable medium or in a transmission signal) or hardware modules. A hardware module is a tangible unit capable of performing certain operations and may be configured or arranged in a certain manner. In example embodiments, one or more computer systems (e.g., the processing system 900) or one or more hardware modules of a computer system (e.g., a processor 902 or a group of processors) may be configured by software (e.g., an application or application portion) as a hardware module that operates to perform certain operations as described herein.

In various embodiments, a hardware module may be implemented mechanically or electronically. For example, a hardware module may include dedicated circuitry or logic that is permanently configured (for example, as a special-purpose processor, such as a field-programmable gate array (FPGA) or an application-specific integrated circuit (ASIC)) to perform certain operations. A hardware module may also include programmable logic or circuitry (for example, as encompassed within a general-purpose processor 902 or other programmable processor) that is temporarily configured by software to perform certain operations. It will be appreciated that the decision to implement a hardware module mechanically, in dedicated and permanently configured circuitry, or in temporarily configured circuitry (for example, configured by software) may be driven by cost and time considerations.

Accordingly, the term "hardware module" should be understood to encompass a tangible entity, be that an entity that is physically constructed, permanently configured (e.g., hardwired) or temporarily configured (e.g., programmed) to operate in a certain manner and/or to perform certain operations described herein. Considering embodiments in which hardware modules are temporarily configured (e.g., programmed), each of the hardware modules need not be configured or instantiated at any one instance in time. For example, where the hardware modules include a general-purpose processor 902 that is configured using software, the general-purpose processor 902 may be configured as respective different hardware modules at different times. Software may accordingly configure a processor 902, for example, to constitute a particular hardware module at one instance of time and to constitute a different hardware module at a different instance of time.

Modules can provide information to, and receive information from, other modules. For example, the described modules may be regarded as being communicatively coupled. Where multiples of such hardware modules exist contemporaneously, communications may be achieved through signal transmissions (such as, for example, over appropriate circuits and buses) that connect the modules. In embodiments in which multiple modules are configured or instantiated at different times, communications between such modules may be achieved, for example, through the storage and retrieval of information in memory structures to which the multiple modules have access. For example, one module may perform an operation and store the output of that operation in a memory device to which it is communicatively coupled. A further module may then, at a later time, access the memory device to retrieve and process the stored output. Modules may also initiate communications with input or output devices, and can operate on a resource (for example, a collection of information).

The various operations of example methods described herein may be performed, at least partially, by one or more processors 902 that are temporarily configured (e.g., by software) or permanently configured to perform the relevant operations. Whether temporarily or permanently configured, such processors 902 may constitute processor-implemented modules that operate to perform one or more operations or functions. The modules referred to herein may, in some example embodiments, include processor-implemented modules.

Similarly, the methods described herein may be at least partially processor-implemented. For example, at least some of the operations of a method may be performed by one or more processors 902 or processor-implemented modules. The performance of certain of the operations may be distributed among the one or more processors 902, not only residing within a single machine but deployed across a number of machines. In some example embodiments, the processors 902 may be located in a single location (e.g., within a home environment, within an office environment, or as a server farm), while in other embodiments, the processors 902 may be distributed across a number of locations.

While the embodiments are described with reference to various implementations and exploitations, it will be understood that these embodiments are illustrative and that the scope of claims provided below is not limited to the embodiments described herein. In general, the techniques described herein may be implemented with facilities consistent with any hardware system or hardware systems defined herein. Many variations, modifications, additions, and improvements are possible.

Plural instances may be provided for components, operations, or structures described herein as a single instance. Finally, boundaries between various components, operations, and data stores are somewhat arbitrary, and particular operations are illustrated in the context of specific illustrative configurations. Other allocations of functionality are envisioned and may fall within the scope of the claims. In general, structures and functionality presented as separate components in the exemplary configurations may be implemented as a combined structure or component. Similarly, structures and functionality presented as a single component may be implemented as separate components. These and other variations, modifications, additions, and improvements fall within the scope of the claims and their equivalents.

## Claims

1. A computer-implemented method, comprising:
generating a directed graph comprising nodes and directed edges interconnecting the nodes, the directed graph being based on information describing a plurality of parties and a plurality of transactions between the plurality of parties;
receiving a circular path length of interest;
identifying strongly connected components of the directed graph;
discovering, within each of the strongly connected components that includes at least a number of nodes equal to the circular path length of interest, using one or more processors of a machine, each circular path having a length equal to the circular path length of interest; and
denoting, for each of the discovered circular paths, transactions represented by the directed edges of the discovered circular path as related transactions.

2. The method of claim 1, the identifying of the strongly connected components comprising applying a depth-first search algorithm to the directed graph.

3. The method of claim 2, the depth-first search algorithm comprising Tarjan's Algorithm.

4. The method of any of claims 1 to 3, the discovering of each of the circular paths having a length equal to the circular path length of interest comprising:
identifying a minimum set of starting nodes of the strongly connected component from which to begin a separate search that results in all of the circular paths having a length equal to the circular path length of interest being identified, and

5. The method of claim 4, the discovering of each of the circular paths having a length equal to the circular path length of interest further comprising:
assigning each starting node to one of a plurality of searching threads; and
executing each of the plurality of searching threads using one of the one or more processors.

6. The method of any of claims 1 to 5, the discovering of each of the circular paths having a length equal to the circular path length of interest comprising:
assigning a unique ordered identifier to each of the nodes of the strongly connected component;
ranking each of the nodes according to its unique ordered identifier; and
searching for circular paths beginning with at least one starting node, each starting node having a rank at least as high as the circular path length of interest.

7. The method of claim 6, the assigning of the unique ordered identifiers being performed randomly.

8. The method of claim 6 or 7, the searching for the circular paths comprising:
eliminating, for each starting node, circular paths that include a node having a rank higher than a rank of the starting node.

9. The method of any of claims 6 to 8, the discovering of each of the circular paths having a length equal to the circular path length of interest further comprising:
discovering, before the searching for the circular paths, a directed path along the nodes in which a first node of the directed path has exactly one outgoing directed edge, a last node of the directed path has exactly one incoming directed edge, and all intermediate nodes of the directed path between the first node and the last node have exactly one incoming directed edge and exactly one outgoing directed edge; and
eliminating each of the nodes of the directed path except for the node of the directed path with the highest rank as a starting node.

10. The method of any of claims 6 to 9, the discovering of each of the circular paths having a length equal to the circular path length of interest further comprising:
discovering, before the searching for the circular paths, a directed path along the nodes in which a first node of the directed path has multiple outgoing directed edges and a second node of the directed path has exactly one incoming directed edge, the exactly one incoming edge originating from the first node; and
eliminating, based on the first node having a higher rank than the second node, the second node as a starting node.

11. A computer system comprising:
data storage to store information describing a plurality of parties and a plurality of transactions between the plurality of parties;
at least one processor;
a graph generation module to generate a directed graph comprising nodes and directed edges interconnecting the nodes, the directed graph being based on the stored information; and
a circular path search module, executable by the at least one processor, to:
receive a circular path length of interest;
identify strongly connected components of the directed graph;
discover, within each of the strongly connected components that includes at least a number of nodes equal to the circular path length of interest, each circular path having a length equal to the circular path length of interest; and
denote, for each of the discovered circular paths, transactions represented by the directed edges of the discovered circular path as related transactions.

12. The system of claim 11, the circular path search module to discover each of the circular paths having a length equal to the circular path length of interest by:
assigning a unique ordered identifier to each of the nodes of the strongly connected component;
ranking each of the nodes according to its unique ordered identifier; and
searching for circular paths beginning with at least one starting node, each starting node having a rank at least as high as the circular path length of interest.

13. The system of claim 12, the circular path search module to assign the unique ordered identifiers to each of the nodes randomly.

14. The system of claim 12 or 13, the circular path search module to search for the circular paths by:
eliminating, for each starting node, circular paths that include a node having a rank higher than a rank of the starting node.

15. A non-transitory computer-readable storage medium including instructions that, when executed by at least one processor of a machine, cause the machine to perform operations according to the method of any one of claims 1 to 10.
